# EUROPEAN PATENT SPECIFICATION

(11) **EP 4 382 855 B1**
(45) Date of publication and mention of the grant of the patent: **20.05.2026**
(21) Application number: 22956681.5
(22) Date of filing: 31.08.2022
(51) Int. Cl.: G01B 11/14, G01B 21/16, G01D 5/12, G01D 5/26, G01D 5/48, G01D 5/20, G01D 5/241, G01D 5/28

(54) **POSITION MEASUREMENT DEVICE, CLAMPING APPARATUS, AND ROLLING SYSTEM**
POSITIONSMESSVORRICHTUNG, KLEMMVORRICHTUNG UND WALZSYSTEM
DISPOSITIF DE MESURE DE POSITION, APPAREIL DE SERRAGE ET SYSTÈME DE ROULEMENT

(43) Date of publication of application: 12.06.2024
(73) Proprietor: Contemporary Amperex Technology (Hong Kong) Limited, Central, Central And Western District (HK)
(72) Inventor: CAI, Hao, NINGDE, Fujian 352100 (CN)
(74) Representative: Jacob, Reuben Ellis
(86) International application number: PCT/CN2022/116178
(87) International publication number: WO 2024/045033

(56) References cited:
- CN-A- 111 113 376
- CN-A- 111 152 061
- CN-A- 112 975 454
- CN-U- 209 740 151
- CN-U- 216 159 817
- US-A1- 2009 121 708
- US-A1- 2010 012 647
- US-A1- 2010 014 101

## Description

### TECHNICAL FIELD

This application relates to the technical field of battery production, in particular to a position detection device, a clamping apparatus and a rolling system.

### BACKGROUND

Energy saving and emission reduction are the key to the sustainable development of the automotive industry, and electric vehicles have become an important part of the sustainable development of the automotive industry due to their energy saving and environmental protection advantages. For the electric vehicles, battery technologies are another important factor in development.

Battery electrode plates are coiled together in the feeding link of battery production, so it is required to squeeze the battery electrode plates coiled together using a chuck of a clamping apparatus, so as to ensure the smooth progress of the feeding link. The position of the chuck needs to be changed as the model of the battery electrode plate changes. After the change of the position of the chuck, it is necessary to check whether the chuck is at the specified position.

In the related art, a magnetic switch is installed on the clamping apparatus to detect whether the chuck moves to the specified position. However, the position of the chuck cannot be monitored in real time.

CN209740151U relates to a battery clamping apparatus including: a battery holder; clamping device, the clamping device comprises a driving mechanism and a clamping jaw, the clamping jaw is connected with the output end of the driving mechanism, the driving mechanism is used for driving the clamping jaw to move in the first direction so as to clamp or release a battery, the clamping jaw is in sliding fit with the output end of the driving mechanism in the second direction, and the clamping jaw is provided with an overvoltage stroke rod. And the overpressure sensor is installed on the driving mechanism and slides relative to the output end of the driving mechanism in the second direction when the clamping jaw is subjected to pressure in the second direction, so that the overpressure stroke rod triggers the overpressure sensor.

### SUMMARY

This application aims at solving at least one of the technical problems in the background art. Therefore, an objective of this application is to provide a position detection device, a clamping apparatus and a rolling system, so as to solve problems in the related art.

An embodiment in the first aspect of this application provides a clamping apparatus for use in battery production as set out in claim 1.

In the technical solution of the embodiment of this application, when the position detection device is applied to a clamping apparatus, the position relationship between the detection block and the sensor changes as a chuck moves, so that the detection distance L1 changes. The detection distance L1 can represent the position relationship between the detection block and the sensor, and indirectly indicate the position relationship between the chuck and a support frame. Since the support frame is fixed, the position of the chuck is detected accordingly. When a model of a battery electrode plate changes, a movement distance of the chuck changes, and then the detection distance also changes accordingly, so that whether the chuck is moved to a specified position can be determined, which omits repeated installation, saves time and effort, and improves production efficiency. At the same time, as long as the position of the chuck changes, the detection distance changes accordingly, so that the position of the chuck can be monitored in real time.

In some embodiments, the detection block includes a top surface and a bottom surface opposite to each other, where the top surface faces the sensor; and in the movement direction X, a distance L2 between the top surface and the bottom surface varies. The top surface faces the sensor, and the sensor is configured to detect the detection distance L1 between the top surface and the sensor. Because in the movement direction X, the distance L2 between different detection points on the top surface and the bottom surface in the detection direction Y is different, when the chuck moves in the movement direction X, the detection distance L1 between the sensor and the top surface changes, so that when the detection block and the sensor move relative to each other, the detection distance L1 changes.

In some embodiments, the top surface and the bottom surface are both planar and form an included angle α therebetween. Because the top surface and the bottom surface are both planar, the production is more convenient. Since the included angle α is formed between the top surface and the bottom surface, the top surface and the bottom surface are not parallel, and one surface is tilted relative to the other surface, so that the distance L2 between the top surface and the bottom surface varies in the movement direction X.

In some embodiments, the included angle α is greater than or equal to 1 degree and less than or equal to 20 degrees. The included angle α is defined within the above range, so that when the length L3 of the detection block is given, the maximum distance between the top surface and the bottom surface is not largely different from the minimum distance between the top surface and the bottom surface. Since the detection distance L1 is related to the distance L2 between the top surface and the bottom surface, the difference between the maximum value and the minimum value of the detection distance L1 is less significant, which avoids the situation that the measured position of the chuck is inaccurate when the maximum value of the detection distance L1 exceeds the detection range of the sensor.

In some embodiments, the sensor is a proximity sensor. The proximity sensor has high sensitivity and does not need to make contact with the detection block, thereby avoiding damage caused by collision with the detection block.

A ratio of the detection distance L1 to a length L3 of the detection block is greater than or equal to 0.1 and less than or equal to 2, which, which ensures that the length L3 of the detection block is within an appropriate range while ensuring that the detection distance L1 is within a detection range.

In some embodiments, the detection distance L1 is greater than or equal to 1 mm and less than or equal to 20 mm. By defining the detection distance L1 within the above range, not only is the distance between the detection block and the sensor ensured, but also the situation that the measured position of the chuck is inaccurate when the maximum value of the detection distance L1 exceeds the detection range of the sensor is avoided.

In some embodiments, in the movement direction X, the length L3 of the detection block is greater than or equal to 10 mm and less than or equal to 40 mm. Because there is an included angle between the top surface and the bottom surface of the detection block, the larger the length L3 of the detection block is, the greater the difference in the maximum distance between the top surface and the bottom surface and the minimum distance between the top surface and the bottom surface tends to be. The length L3 of the detection block is defined within the above range, which can ensure that the maximum distance between the top surface and the bottom surface is not largely different from the minimum distance between the top surface and the bottom surface.

The clamping apparatus includes a position detection device and is for use for battery production. When the model of the battery electrode plate changes, the movement distance of the chuck changes, and then the detection distance also changes accordingly, so that whether the chuck is moved to the specified position can be determined, which omits repeated installation, saves time and effort, and improves production efficiency. At the same time, as long as the position of the chuck changes, the detection distance changes accordingly, so that the position of the chuck can be monitored in real time.

The clamping apparatus further includes: a support frame, where one of the detection block and the sensor is fixedly connected to the support frame; and a chuck movably connected to the support frame in the movement direction X, where the other of the detection block and the sensor is connected to the chuck. The support frame provides an installation position for the detection block or the sensor, and the chuck moves on the support frame in the movement direction X to squeeze a cylindrical structure.

In some embodiments, the support frame is provided with a movement track extending in the movement direction X, and the chuck includes a slider located in the movement track. The movement track is arranged on the support frame, thereby defining the movement of the chuck.

In some embodiments, the support frame includes: an upper support beam provided with a movement track; a lower support beam arranged opposite to the upper support beam and provided with a movement track, where two opposite sides of the same surface of the chuck are each provided with a slider, one of the sliders is located in the movement track on the upper support beam, and the other of the sliders is located in the movement track on the lower support beam. The upper support beam and the lower support beam are each provided with a movement track, and the sliders on the two opposite sides of the same surface of the chuck are respectively located in the two movement tracks, that is, while the chuck is fixed from two ends of the chuck, the movement direction of the chuck is also defined from both ends of the chuck, which not only ensures the stability of the chuck, but also defines the movement direction of the chuck.

In some embodiments, the chuck includes: a chuck body, where the sliders are located on two opposite sides of the chuck body; and a chuck block connected to a middle portion of the chuck body. The chuck body is configured to define the movement direction of the chuck, and the chuck block realizes the squeezing function of the chuck.

In some embodiments, the clamping apparatus further includes: an air cylinder, where a cylinder barrel of the air cylinder is connected to the support frame, and a piston rod of the air cylinder is connected to the chuck. The cylinder barrel is fixedly connected to the support frame, and a piston in the cylinder barrel pushes the piston rod to move. Because the piston rod is connected to the chuck, the movement of the chuck is realized.

An embodiment in the third aspect of this application provides a rolling system. The rolling system includes the clamping apparatus according to the above embodiment.

The above description is only an overview of the technical solutions of this application, in order to be able to more clearly understand the technical means of this application, the technical solutions may be implemented in accordance with the contents of the specification, and in order to make the above and other objectives, features and advantages of this application more apparent and understandable, the specific implementations of this application are thereby listed.

### BRIEF DESCRIPTION OF DRAWINGS

In the drawings, unless otherwise specified, the same reference numerals throughout multiple drawings indicate the same or similar components or elements. These drawings are not necessarily drawn to scale. It should be understood that these drawings merely depict some of the implementations disclosed in accordance with this application, rather than be regarded as a limitation on the scope of this application.
FIG. 1 is a front view of a clamping apparatus according to some embodiments of this application.
FIG. 2 is a partial enlarged view of a clamping apparatus according to some embodiments of this application.
FIG. 3 is a schematic structural diagram of a detection block according to some embodiments of this application.
FIG. 4 is a left view of a clamping apparatus according to some embodiments of this application.
FIG. 5 is a right view of a clamping apparatus according to some embodiments of this application.
FIG. 6 is a top view of a clamping apparatus according to some embodiments of this application.

### Reference numerals in the drawings:

10. support frame; 101. movement track; 102. upper support beam; 103. lower support beam; 104. side support beam; 20. chuck; 201. slider; 202. chuck body; 203. chuck block; 30. detection block; 301. top surface; 302. bottom surface; 303. side surface; 331. first sub-side surface; 332. second sub-side surface; 40, sensor; 50. air cylinder; 501. cylinder barrel; and 502. piston rod.

### DETAILED DESCRIPTION OF EMBODIMENTS

The following describes in detail the embodiments of the technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by persons skilled in the art to which this application belongs. The terms used herein are intended to merely describe the specific embodiments rather than to limit this application. The terms "comprise", "include", and any other variations thereof in the specification, claims and brief description of drawings of this application are intended to cover non-exclusive inclusions.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the descriptions of the embodiments of this application, the term "and/or" describes only an association relationship for describing associated objects and represents that three relationships may exist. For example, A and/or B may represent: the following three cases: only A alone, both A and B, and only B alone. In addition, the character "/" in this specification generally indicates an "or" relationship between contextually associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings, merely to facilitate the description of the embodiments of this application and simplify the description, rather than to indicate or imply that the device or element referred to must have a particular orientation, be constructed and operated in a particular orientation, and thus should not be construed as limiting the embodiments of this application.

In the description of the embodiments of this application, unless otherwise expressly specified and limited, the technical terms "mounted", "connected", "connect", "fixed" and the like are to be understood in a broad sense, for example, it may be a fixed connection, or a detachable connection, or an integral connection; it may also be a mechanical connection or an electrical connection; and it may be a direct connection or indirect connection through an intermediate medium, and may be the interior communication between two elements or the interaction relationship between two elements. For a person of ordinary skill in the art, the specific meaning of the above-mentioned terms in the embodiments of this application may be understood according to specific circumstances.

At present, clamping apparatuses have been widely used in the production process of batteries. In the process of battery production, battery electrode plates are coiled together into a cylindrical structure during feeding. One end of the cylindrical structure is fixed, and the other end is squeezed through a chuck, so as to ensure the stability of the cylindrical structure, and thus guarantee the smooth progress of the feeding link. A clamping apparatus includes a support frame and a chuck capable of sliding on the support frame. By controlling the movement of the chuck, the chuck can squeeze the cylindrical structure.

The applicant notes that with the change of the model of the battery electrode plate, the movement distance of the chuck needs to change accordingly, so as to ensure that the chuck can effectively fix the cylindrical structure. Then the position of the chuck needs to be monitored to ensure that the chuck moves to the specified position. In the related art, a magnetic switch is installed on the clamping apparatus to monitor whether the chuck moves to the specified position. However, the magnetic switch needs to be reinstalled every time the model of the battery electrode plate changes, which is time-consuming and laborious, causes low production efficiency, and meanwhile makes it impossible to monitor the position of the chuck in real time.

The applicant provides a position detection device which can be applied to the clamping apparatus. The position detection device includes a detection block and a sensor. The sensor is configured to detect a detection distance between the sensor and the detection block in a detection direction Y. The detection block and the sensor are set to move relative to each other, and the detection distance L1 gradually changes in a movement direction X. Fixed components in the detection block and the sensor can be connected to a bracket, and movable components in the detection block and the sensor can be connected to the chuck, so that the movable components can move with the chuck, and the detection distance can be changed. The detection distance can represent the distance between the detection block and the sensor, and indirectly indicate the distance between the chuck and the support frame. Since the support frame is fixed, the position of the chuck is detected accordingly. When a model of a battery electrode plate changes, a movement distance of the chuck changes, and then the detection distance also changes accordingly, so that whether the chuck is moved to a specified position can be determined, which omits repeated installation, saves time and effort, and improves production efficiency. At the same time, as long as the position of the chuck changes, the detection distance changes accordingly, so that the position of the chuck can be monitored in real time.

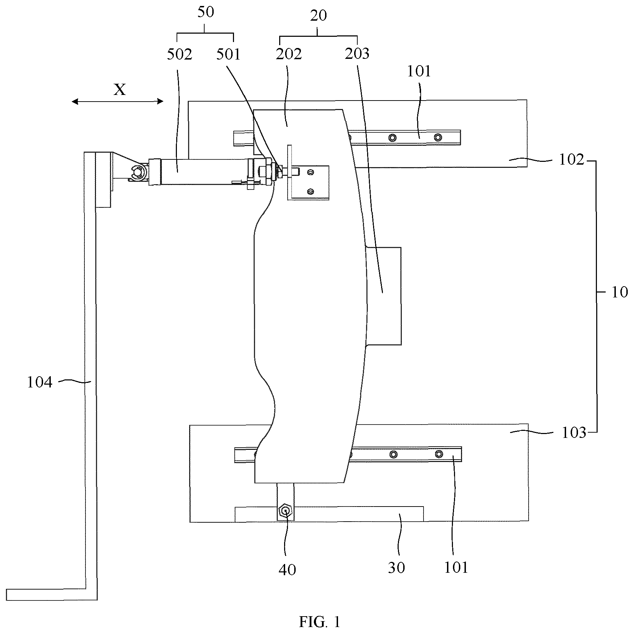

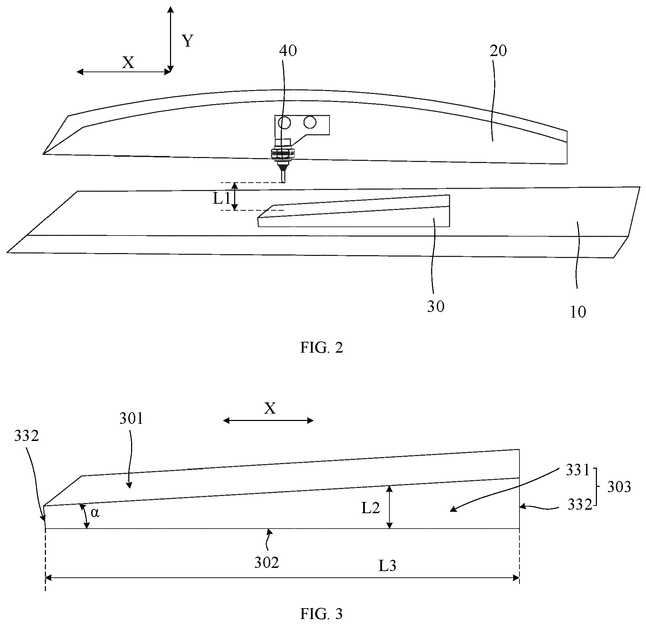

Some embodiments useful for understanding this application provide a position detection device which can be applied to a clamping apparatus. FIG. 1 is a front view of a clamping apparatus according to some embodiments of this application. FIG. 2 is a partial enlarged view of a clamping apparatus according to some embodiments of this application. In conjunction with FIG. 1 and FIG. 2, the position detection device includes: a detection block 30; and a sensor 40 configured to detect a detection distance L1 between the sensor 40 and the detection block 30 in a detection direction Y. The detection block 30 and the sensor 40 are set to move relative to each other, and the detection distance L1 gradually changes in a movement direction X, where the detection distance L1 is configured to represent a position of the detection block 30 or the sensor 40, and the detection direction Y intersects with the movement direction X.

In an embodiment of this application, the relative movement of the detection block 30 and the sensor 40 may be represented in a manner that one of the detection block 30 and the sensor 40 is fixed, and the other of the detection block 30 and the sensor 40 is movable.

Referring to FIG. 1 and FIG. 2, the clamping apparatus includes a support frame 10 and a chuck 20. In one implementation of the embodiment of this application, the detection block 30 is connected to the support frame 10, and the sensor 40 is connected to the chuck 20. In the clamping apparatus, the support frame 10 is fixed and the chuck 20 is movable. In FIG. 1 and FIG. 2, the detection block 30 is fixed and the sensor 40 is movable.

In other implementations, it is possible to connect the detection block 30 to the chuck 20,and connect the sensor 40 to the support frame 10, in this case, the detection block 30 is movable and the sensor 40 is fixed.

In an embodiment of this application, the detection distance L1 is the distance between the sensor 40 and the detection block 30 in the detection direction Y. In some cases, the detection distance L1 is a minimum distance between the sensor 40 and the detection block 30; in other cases, the detection distance L1 is not a minimum distance between the sensor 40 and the detection block 30, which is specifically related to the position relationship between the detection block 30 and the sensor 40.

In an embodiment of this application, the detection distance L1 changes gradually in the movement direction X, indicating that as long as the position relationship between the detection block 30 and the sensor 40 changes, the detection distance L1 changes accordingly, that is, the position relationship between the detection block 30 and the sensor 40 is in a one-to-one mapping relationship with the detection distance L1.

In one implementation of the embodiment of this application, the detection direction Y is perpendicular to the movement direction X.

In another implementation of the embodiment of this application, the detection direction Y intersects with but is not perpendicular to the movement direction X.

In an embodiment of this application, when the position detection device is applied to the clamping apparatus, one of the detection block 30 and the sensor 40 is fixed to the support frame, and the other of the detection block 30 and the sensor 40 is connected to the chuck, so that the detection block 30 and the sensor 40 are set to move relative to each other. The position relationship between the detection block 30 and the sensor 40 changes as the chuck moves, so that the detection distance L1 changes. The detection distance L1 can represent the position relationship between the detection block 30 and the sensor 40, and indirectly indicate the position relationship between the chuck and the support frame. Since the support frame is fixed, the position of the chuck is detected accordingly. When a model of a battery electrode plate changes, a movement distance of the chuck changes, and then the detection distance also changes accordingly, so that whether the chuck is moved to a specified position can be determined, which omits repeated installation, saves time and effort, and improves production efficiency. At the same time, as long as the position of the chuck changes, the detection distance changes accordingly, so that the position of the chuck can be monitored in real time.

It should be understood that although the structure and function of the position detection device of this application are described above based on the specific application scenario of the clamping apparatus, the position detection device of this application can be applied to other application scenarios requiring continuous position detection within a certain range. In addition, the position detection device of this application is simple in structure, and easy to install.

According to some embodiments of this application, FIG. 3 is a schematic structural diagram of a detection block according to some embodiments of this application. Referring to FIG. 3, the detection block 30 includes a top surface 301 and a bottom surface 302 opposite to each other, where the top surface 301 faces the sensor 40; and in the movement direction X, a distance L2 between different detection points on the top surface 301 and the bottom surface 302 in the detection direction Y is different.

In an embodiment of this application, the top surface 301 faces the sensor 40, and the bottom surface 302 can be used for fixing.

The top surface 301 faces the sensor 40 configured to detect the detection distance L1 between the top surface 301 and the sensor 40. Because in the movement direction X, the distance L2 between different detection points on the top surface 301 and the bottom surface 302 is different, when the chuck moves in the movement direction X, the detection distance L1 between the sensor 40 and the top surface 301 changes, so that when the detection block 30 and the sensor 40 move relative to each other, the detection distance L1 changes accordingly.

According to some embodiments of this application, the top surface 301 and the bottom surface 302 are both planar and form an included angle α therebetween.

Because the top surface 301 and the bottom surface 302 are both planar, the production is more convenient. Since the included angle α is formed between the top surface 301 and the bottom surface 302, the top surface 301 and the bottom surface 302 are not parallel, and one surface is tilted relative to the other surface, so that the distance L2 between the top surface 301 and the bottom surface 302 varies in the movement direction X.

According to some embodiments of this application, the included angle α is greater than or equal to 1° and less than or equal to 20°.

Exemplarily, the included angle α is equal to 1°; or the included angle α is equal to 5°; or the included angle α is equal to 10°; or the included angle α is equal to 15°; or the included angle α is equal to 20°.

In an embodiment of this application, the included angle α is defined as greater than or equal to 1° and less than or equal to 20°. When a length L3 of the detection block is given, the maximum distance between the top surface 301 and the bottom surface 302 is not largely different from the minimum distance between the top surface and the bottom surface. Since the detection distance L1 is related to the distance L2 between the top surface 301 and the bottom surface 302, the difference between the maximum value and the minimum value of the detection distance L1 is less significant, which avoids the situation that the measured position of the chuck is inaccurate when the maximum value of the detection distance L1 exceeds the detection range of the sensor 40.

Referring again to FIG. 3, the detection block 30 also includes a side surface 303 which is also a plane, and the side surface 303 is connected to the top surface 301 and the bottom surface 302, that is, the detection block 30 is of a blocky structure. The side surface 303 includes two first sub-side surfaces 331 arranged opposite to each other and two second sub-side surfaces 332 arranged opposite to each other, where the two first sub-side surfaces 331 are in a shape of right-angled trapezoids, and the two second sub-side surfaces 332 are in a shape of rectangles, that is, the detection block 30 is a right-angle trapezoidal block, which is a structure easier to make.

In other implementations, the two first sub-side surfaces 331 may be in other shapes, which is not limited in this application.

According to some embodiments of this application, the sensor 40 is a proximity sensor.

A proximity sensor is a device capable of perceiving the proximity of an object, which can detect the movement and existence of the detected object and convert such information into electrical signals without making contact with the detected object.

Exemplarily, the sensor 40 may be a capacitive proximity sensor or an inductive proximity sensor or a photoelectric proximity sensor.

The proximity sensor has high sensitivity and does not need to make contact with the detection block 30, thereby avoiding damage caused by collision with the detection block.

According to some embodiments of this application, a ratio of the detection distance L1 to the length L3 of the detection block 30 is greater than or equal to 0.1 and less than or equal to 2.

Exemplarily, L1/L3 is equal to 0.1, L1/L3 is equal to 0.5, L1/L3 is equal to 1, L1/L3 is equal to 1.5, and L1/L3 is equal to 2.

By defining the ratio of L1 to L3, it is ensured that the length L3 of the detection block 30 is within an appropriate range while ensuring that the detection distance L1 is within a detection range.

According to some embodiments of this application, the detection distance L1 is greater than or equal to 1 mm and less than or equal to 20 mm.

Exemplarily, the detection distance L1 is greater than or equal to 5 mm and less than or equal to 15 mm.

By defining the detection distance L1 within the range of greater than or equal to 1 mm and less than or equal to 20 mm, not only is the distance between the detection block 30 and the sensor 40 ensured, but also the situation that the measured position of the chuck 20 is inaccurate when the maximum value of the detection distance L1 exceeds the detection range of the sensor 40 is avoided.

According to some embodiments of this application, in the movement direction X, the length L3 of the detection block 30 is greater than or equal to 10 mm and less than or equal to 40 mm.

Exemplarily, the length L3 of the detection block 30 is greater than or equal to 20 mm and less than or equal to 30 mm.

Because there is an included angle between the top surface 301 and the bottom surface 302 of the detection block 30, the larger the length L3 of the detection block 30 is, the greater the difference in the maximum distance between the top surface 301 and the bottom surface 302 and the minimum distance between the top surface and the bottom surface tends to be. By defining the length L3 of the detection block 30 within the range of greater than or equal to 10 mm and less than or equal to 40 mm, it can be ensured that the maximum distance between the top surface 301 and the bottom surface 302 is not largely different from the minimum distance between the top surface and the bottom surface.

This application provides a clamping apparatus. The clamping apparatus includes the position detection device according to the above embodiment.

The clamping apparatus according to the embodiment of this application can be used for battery production. When a model of a battery electrode plate changes, the movement distance of the chuck changes, and then the detection distance also changes accordingly, so that whether the chuck is moved to the specified position can be determined, which omits repeated installation, saves time and effort, and improves production efficiency. At the same time, as long as the position of the chuck changes, the detection distance changes accordingly, so that the position of the chuck can be monitored in real time.

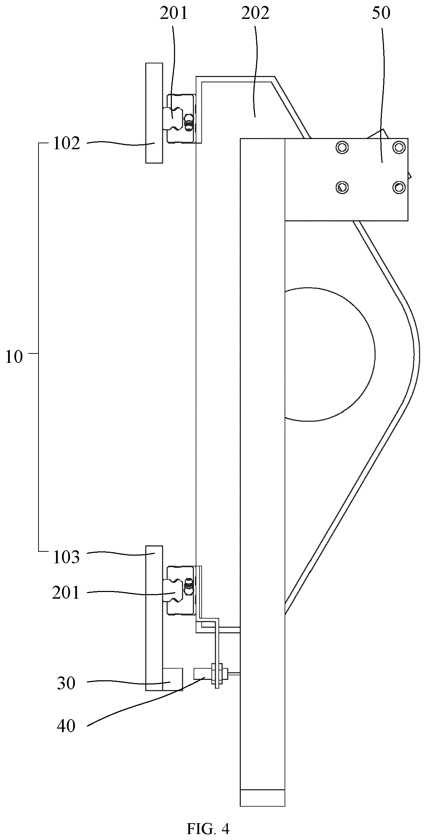

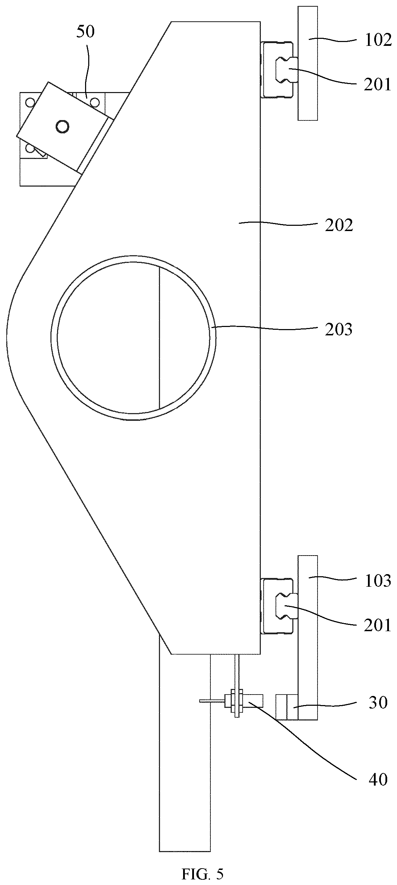

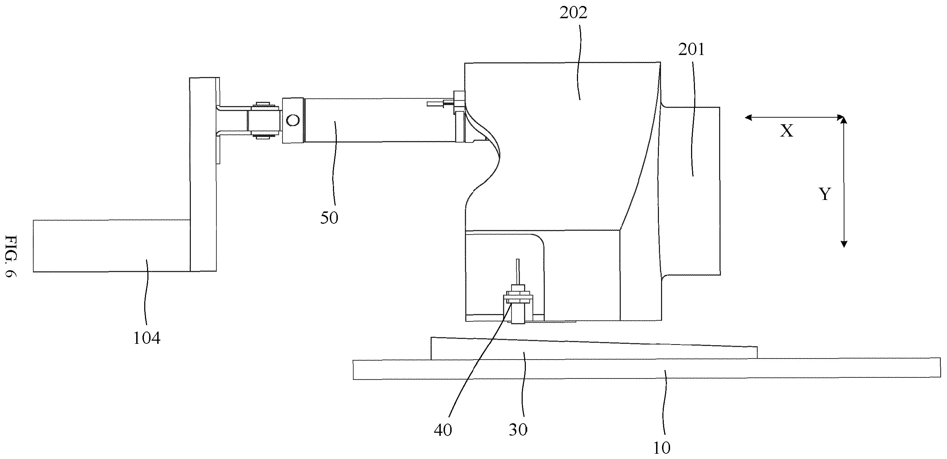

According to some embodiments of this application, FIG. 4 is a left view of a clamping apparatus according to some embodiments of this application, FIG. 5 is a right view of a clamping apparatus according to some embodiments of this application, and FIG. 6 is a top view of a clamping apparatus according to some embodiments of this application. In conjunction with FIG. 1, FIG. 4, FIG. 5 and FIG. 6, the clamping apparatus further includes a support frame 10 and a chuck 20 movably connected to the support frame 10 in the movement direction X. One of the detection block 30 and the sensor 40 is fixedly connected to the support frame 10; and the other of the detection block 30 and the sensor 40 is connected to the chuck 20.

In one implementation of the embodiment of this application, the detection block 30 is connected to the support frame 10, and the sensor 40 is connected to the chuck 20. In other implementations, it is possible to connect the detection block 30 to the chuck 20, and connect the sensor 40 to the support frame 10.

In an embodiment of this application, the bottom surface 302 of the detection block 30 may be glued to the support frame 10 by an adhesive, or the bottom surface 302 of the detection block 30 may be fixed on the support frame 10 by screws.

In an embodiment of this application, the sensor 40 may be connected to the chuck 20 through bolts and nuts.

In an embodiment of this application, the support frame 10 provides an installation position for the detection block 30 or the sensor 40, and the chuck 20 moves on the support frame 10 in the movement direction X to squeeze the cylindrical structure.

According to some embodiments of this application, in conjunction with FIG. 1, FIG. 4, FIG. 5 and FIG. 6, the support frame 10 is provided with a movement track 101 extending in the movement direction X, and the chuck 20 includes a slider 201 located in the movement track 101.

The slider 201 moves within the movement track 101 so that the entire chuck 20 moves.

Exemplarily, the movement track 101 may be a groove in the support frame 10.

The movement track 101 is arranged on the support frame 10, thereby defining the movement of the chuck 20.

According to some embodiments of this application, in conjunction with FIG. 1, FIG. 4, FIG. 5 and FIG. 6, the support frame 10 includes an upper support beam 102 and a lower support beam 103, and the lower support beam 103 and the upper support beam 102 are arranged opposite to each other. The upper support beam 102 is provided with a movement track 101, and the lower support beam 103 is provided with a movement track 101. Two opposite sides of the same surface of the chuck 20 are each provided with a slider 201, one of the sliders 201 is located in the movement track 101 on the upper support beam 102, and the other of the sliders 201 is located in the movement track 101 on the lower support beam 103.

In an embodiment of this application, the upper support beam 102 and the lower support beam 103 are arranged opposite to each other, and the chuck 20 is located between the upper support beam 102 and the lower support beam 103.

Exemplarily, the detection block 30 is fixedly connected to one of the upper support beam 102 and the lower support beam 103.

The upper support beam 102 and the lower support beam 103 are each provided with a movement track 101, and the sliders 201 on the two opposite sides of the same surface of the chuck 20 are respectively located in the two movement tracks 101, that is, while the chuck 20 is fixed from two ends of the chuck 20, the movement direction of the chuck 20 is also defined from both ends of the chuck 20, which not only ensures the stability of the chuck 20, but also defines the movement direction of the chuck 20.

According to some embodiments of this application, referring to FIG. 1 and FIG. 6, the chuck 20 includes a chuck body 202 and a chuck block 203, where the sliders 201 are located on two opposite sides of the chuck body 202, and the chuck block 203 is connected to a middle portion of the chuck body 202.

In an embodiment of this application, the sliders 201 are located on two opposite sides of the chuck body 202, that is, the chuck body 202 is configured to define the movement direction of the chuck 20, and the chuck block 203 realizes the squeezing function of the chuck 20.

Exemplarily, the sensor 40 is connected to the chuck body 202.

According to some embodiments of this application, referring to FIG. 1 and FIG. 6, the clamping apparatus further includes an air cylinder 50, where a cylinder barrel 501 of the air cylinder 50 is connected to the support frame 10, and a piston rod 502 of the air cylinder 50 is connected to the chuck 20.

In an embodiment of this application, the support frame 10 also includes a side support beam 104, and the cylinder barrel 501 can be connected to any one of the upper support beam 102, the lower support beam 103 and the side support beam 104, so as to ensure the stability of the air cylinder 50.

In an embodiment of this application, the cylinder barrel 501 is fixedly connected to the support frame 10, and a piston in the cylinder barrel 501 pushes the piston rod 502 to move. Because the piston rod 502 is connected to the chuck 20, the movement of the chuck 20 is realized.

Exemplarily, the cylinder barrel 501 and the piston rod 502 extend in the movement direction X to ensure that the piston rod 502 moves in the movement direction X, thereby causing the chuck 20 to move in the movement direction X.

Some embodiments of this application provide a rolling system. The rolling system includes the clamping apparatus in the above embodiments.

The rolling system provided in the embodiments of this application can be used for battery production, and the position detection device does not need to be installed repeatedly, which saves time and effort, and improves production efficiency. At the same time, as long as the position of the chuck changes, the detection distance changes accordingly, so that the position of the chuck can be monitored in real time.

In an embodiment of this application, the rolling system further includes a programmable logic controller (PLC). The sensor 40 and the air cylinder 50 are electrically connected to the PLC. The sensor 40 transmits the position of the chuck 20 to the PLC, and the PLC adjusts the movement distance of the piston rod 502 of the air cylinder 50 according to the position of the chuck 20, so as to adjust the position of the chuck 20.

In an embodiment of this application, when the chuck 20 is located at any position within the movement range, there is a gap distance (i.e., the detection distance L1) between the sensor 40 and a slope surface (i.e., the top surface 301) of the detection block 30, which can be detected by the sensor 40. The sensor 40 is in communication with the PLC of the apparatus via a signal cable. Before the first use, the maximum value L1max and minimum value L1min corresponding to the detection distance L1 detected by the sensor 40 when the chuck 20 moves at a maximum movement distance and a minimum movement distance in the movement direction X are recorded; at the same time, by determining the difference A between the maximum movement distance and the minimum movement distance of the chuck 20 in the movement direction X, the slope K=(L1max-L1min)/A of the detection block 30 can be calculated.

Exemplarily, when the air cylinder 50 acts, the piston rod 502 pushes the chuck 20 to any position within the movement range, and the accurate value of the movement position of the chuck 20 can be obtained simply by dividing the detection distance L1 detected by the sensor 40 by the slope K. Therefore, any movement position within the movement range of the chuck 20 can be recorded as a target position, which can be used to judge whether the work of the chuck 20 is in place or not.

Exemplarily, whether the chuck 20 is in place is judged by the difference between a real-time position value detected by the working sensor 40 and the saved target position. An allowable error interval threshold B is set. If the difference between the real-time position value and the saved target position is greater than an in-place error threshold B, it is judged that the chuck 20 is not in place and an alarm signal is sent out by the PLC for further processing.

Exemplarily, even if the difference between the real-time position value and the saved target position is less than the in-place error threshold B, it can be used as a basis for predicting the failure of the chuck 20 as long as the difference is close to the in-place error threshold B, which falls under the category of predictive maintenance.

Exemplarily, in case a new target position needs to be calibrated, it is only required to actually push the chuck 20 to move to this position using the air cylinder 50, and save the position value at this moment as the new target value via one click on a touch screen of the apparatus. There is no need to change the physical installation location for maintenance or debugging.

Exemplarily, if the working position of the chuck 20 needs to be changed, an initial position or a working position of the chuck 20 can be re-calibrated. The change of the working position of the chuck 20 involves two cases: in one case, the change is required by the process; and in the other case, the error increases after the aging and loss of the apparatus, and it is required to re-adjust a working position or initial position of a magnetic switch or proximity switch of the air cylinder 50.

Exemplarily, the real-time position of the chuck 20 within a certain period of time is recorded every time the chuck comes to the working position, and then through the analysis of the difference between the recorded position and the target position, the overall performance of an air cylinder can be well judged. It is very helpful for predictive maintenance, and problems can be found in advance to avoid capacity loss caused by failure of the air cylinder.

This application provides a clamping apparatus. The clamping apparatus includes a support frame 10, a chuck 20, a detection block 30, a sensor 40 and an air cylinder 50.

The support frame 10 includes an upper support beam 102 and a lower support beam 103, and the lower support beam 103 and the upper support beam 102 are arranged opposite to each other. The upper support beam 102 is provided with a movement track 101, and the lower support beam 103 is provided with a movement track 101.

The chuck 20 includes a chuck body 202 and a chuck block 203, where sliders 201 are provided on two opposite sides of the chuck body 202, and the chuck block 203 is connected to a middle portion of the chuck body 202. One of the sliders 201 is located in the movement track 101 on the upper support beam 102, and the other of the sliders 201 is located in the movement track 101 on the lower support beam 103.

The detection block 30 includes a top surface 301 and a bottom surface 302 opposite to each other. The top surface 301 faces the sensor 40, and the bottom surface 302 is fixedly connected to the support frame 10. In a movement direction X, a distance L2 between different detection points on the top surface 301 and the bottom surface 302 in a detection direction Y is different. The top surface 301 and the bottom surface 302 are both planar, and form an included angle α therebetween, where the included angle α is greater than or equal to 1° and less than or equal to 20°. A length L3 of the detection block 30 is greater than or equal to 20 mm and less than or equal to 30 mm.

The sensor 40 is a proximity sensor connected to the chuck body 202.

A cylinder barrel 501 of the air cylinder 50 is connected to the support frame 10, and a piston rod 502 of the air cylinder 50 is connected to the chuck 20.

Finally, it should be noted that: The foregoing embodiments are merely intended to describe the technical solutions of this application rather than to limit the technical solutions. Although this application is described in detail with reference to the foregoing embodiments, persons of ordinary skill in the art should understand that: they may still make modifications to the technical solutions described in the foregoing examples; however, these modifications do not make the essence of the corresponding technical solution depart from the scope of the technical solutions of the embodiments, and should all be covered in the scope of the claims and specification in this application. In particular, respective technical features mentioned in the respective embodiments may be combined in any manner as long as there is no structural conflict. This application is not limited to the specific embodiments disclosed in this specification, but includes all technical solutions falling within the scope of the claims.

## Claims

1. A clamping apparatus for use in battery production, comprising:
a position detection device;
a support frame (10), wherein one of the detection block (30) and the sensor (40) is fixedly connected to the support frame (10); and
a chuck (20) movably connected to the support frame (10) in the movement direction X, wherein the other of the detection block (30) and the sensor (40) is connected to the chuck (20);
wherein the position detection device comprises:
a detection block (30); and
a sensor (40) configured to detect a detection distance L1 between the sensor (40) and the detection block (30) in a detection direction Y, wherein
the detection block (30) and the sensor (40) are set to move relative to each other, and the detection distance L1 gradually changes in a movement direction X, wherein the detection distance L1 is configured to represent a position of the detection block (30) or the sensor (40), and the detection direction Y intersects with the movement direction X,
wherein a ratio of the detection distance L1 to a length L3 of the detection block (30) is greater than or equal to 0.1 and less than or equal to 2.

2. The clamping apparatus according to claim 1, wherein the detection block (30) comprises a top surface (301) and a bottom surface (302) opposite to each other, and the top surface (301) faces the sensor (40); and
in the movement direction X, a distance L2 between different detection points on the top surface (301) and the bottom surface (302) in the detection direction Y is different.

3. The clamping apparatus according to claim 2, wherein the top surface (301) and the bottom surface (302) are both planar and form an included angle α therebetween.

4. The clamping apparatus according to claim 3, wherein the included angle α is greater than or equal to 1 degree and less than or equal to 20 degrees.

5. The clamping apparatus according to any one of claims 1 to 4, wherein the sensor (40) is a proximity sensor.

6. The clamping apparatus according to any one of claims 1 to 5, wherein the detection distance L1 is greater than or equal to 1 mm and less than or equal to 20 mm.

7. The clamping apparatus according to any one of claims 1 to 6, wherein in the movement direction X, the length L3 of the detection block (30) is greater than or equal to 10 mm and less than or equal to 40 mm.

8. The clamping apparatus according to any preceding claim, wherein the support frame (10) is provided with a movement track (101) extending in the movement direction X, and the chuck (20) comprises a slider (201) located in the movement track (101).

9. The clamping apparatus according to claim 8, wherein the support frame (10) comprises:
an upper support beam (102) provided with the movement track (101); and
a lower support beam (103) arranged opposite to the upper support beam (102) and provided with the movement track (101), wherein
two opposite sides of the same surface of the chuck (20) are each provided with a slider (201), wherein one of the sliders (201) is located in the movement track (101) on the upper support beam (102), and the other of the sliders (201) is located in the movement track (101) on the lower support beam (103).

10. The clamping apparatus according to claim 9, wherein the chuck (20) comprises:
a chuck body (202), wherein the sliders (201) are located on two opposite sides of the chuck body (202); and
a chuck block (203) connected to a middle portion of the chuck body (202).

11. The clamping apparatus according to any one of claims 1 to 10, further comprising:
an air cylinder (50), wherein a cylinder barrel (501) of the air cylinder (50) is connected to the support frame (10), and a piston rod (502) of the air cylinder (50) is connected to the chuck (20).

12. A rolling system, comprising the clamping apparatus according to any one of claims 1 to 11.

## Patentansprüche

1. Klemmvorrichtung zur Verwendung in der Batterieproduktion, umfassend:
eine Positionserkennungseinrichtung,
einen Tragrahmen (10), wobei eines von dem Erkennungsblock (30) und dem Sensor (40) fest mit dem Tragrahmen (10) verbunden ist, und
eine Spannvorrichtung (20), die beweglich in der Bewegungsrichtung X mit dem Tragrahmen (10) verbunden ist, wobei das andere von dem Erkennungsblock (30) und dem Sensor (40) mit der Spannvorrichtung (20) verbunden ist,
wobei die Positionserkennungseinrichtung Folgendes umfasst:
einen Erkennungsblock (30) und
einen Sensor (40), der dafür gestaltet ist, eine Erkennungsdistanz L1 zwischen dem Sensor (40) und dem Erkennungsblock (30) in einer Erkennungsrichtung Y zu erkennen, wobei
der Erkennungsblock (30) und der Sensor (40) eingestellt sind, sich relativ zueinander zu bewegen, und sich die Erkennungsdistanz L1 in einer Bewegungsrichtung X allmählich verändert, wobei die Erkennungsdistanz L1 dafür gestaltet ist, eine Position des Erkennungsblocks (30) oder des Sensors (40) darzustellen, und die Erkennungsrichtung Y die Bewegungsrichtung X schneidet,
wobei ein Verhältnis der Erkennungsdistanz L1 zu einer Länge L3 des Erkennungsblocks (30) größer oder gleich 0,1 und kleiner oder gleich 2 ist.

2. Klemmvorrichtung nach Anspruch 1, wobei der Erkennungsblock (30) eine Oberseite (301) und eine Unterseite (302), die einander gegenüberliegen, umfasst, und die Oberseite (301) zu dem Sensor (40) weist, und
in der Bewegungsrichtung X eine Distanz L2 zwischen verschiedenen Erkennungspunkten auf der Oberseite (301) und der Unterseite (302) in der Erkennungsrichtung Y unterschiedlich ist.

3. Klemmvorrichtung nach Anspruch 2, wobei sowohl die Oberseite (301) als auch die Unterseite (302) eben sind und zwischen sich einen eingeschlossenen Winkel α bilden.

4. Klemmvorrichtung nach Anspruch 3, wobei der eingeschlossene Winkel α größer oder gleich 1 Grad und kleiner oder gleich 20 Grad ist.

5. Klemmvorrichtung nach einem der Ansprüche 1 bis 4, wobei der Sensor (40) ein Näherungssensor ist.

6. Klemmvorrichtung nach einem der Ansprüche 1 bis 5, wobei die Erkennungsdistanz L1 größer oder gleich 1 mm und kleiner oder gleich 20 mm ist.

7. Klemmvorrichtung nach einem der Ansprüche 1 bis 6, wobei die Länge L3 des Erkennungsblocks (30) in der Bewegungsrichtung X größer oder gleich 10 mm und kleiner oder gleich 40 mm ist.

8. Klemmvorrichtung nach einem vorhergehenden Anspruch, wobei der Tragrahmen (10) mit einer Bewegungsschiene (101) versehen ist, die sich in der Bewegungsrichtung X erstreckt, und die Spannvorrichtung (20) ein Gleitstück (201) umfasst, das in der Bewegungsschiene (101) angeordnet ist.

9. Klemmvorrichtung nach Anspruch 8, wobei der Tragrahmen (10) Folgendes umfasst:
einen oberen Tragbalken (102), der mit der Bewegungsschiene (101) versehen ist, und
einen unteren Tragbalken (103), der gegenüber dem oberen Tragbalken (102) angerordnet und mit der Bewegungsschiene (101) versehen ist, wobei
zwei gegenüberliegende Seiten dergleichen Oberfläche der Spannvorrichtung (20) jeweils mit einem Gleitstück (201) versehen sind, wobei eines der Gleitstücke (201) in der Bewegungsschiene (101) an dem oberen Tragbalken (102) angeordnet ist und das andere der Gleitstücke (201) in der Bewegungsschiene (101) an dem unteren Tragbalken (103) angeordnet ist.

10. Klemmvorrichtung nach Anspruch 9, wobei die Spannvorrichtung (20) Folgendes umfasst:
einen Spannvorrichtungshauptteil (202), wobei die Gleitstücke (201) an zwei gegenüberliegenden Seiten des Spannvorrichtungshauptteils (202) angeordnet sind, und
einen Spannvorrichtungsblock (203), der mit einem mittleren Abschnitt des Spannvorrichtungshauptteils (202) verbunden ist.

11. Klemmvorrichtung nach einem der Ansprüche 1 bis 10, ferner umfassend:
einen Luftzylinder (50), wobei ein Zylindermantel (501) des Luftzylinders (50) mit dem Tragrahmen (10) verbunden ist und eine Kolbenstange (502) des Luftzylinders mit der Spannvorrichtung (20) verbunden ist.

12. Walzsystem, umfassend die Klemmvorrichtung nach einem der Ansprüche 1 bis 11.

## Revendications

1. Appareil de serrage destiné à être utilisé dans la production de batteries, comprenant :
un dispositif de détection de position ;
un cadre de support (10), dans lequel l'un du bloc de détection (30) et du capteur (40) est fixement relié au cadre de support (10) ; et
un mandrin (20) relié de façon mobile au cadre de support (10) dans la direction de mouvement X, dans lequel l'autre du bloc de détection (30) et du capteur (40) est relié au mandrin (20) ;
dans lequel le dispositif de détection de position comprend :
un bloc de détection (30) ; et
un capteur (40) configuré pour détecter une distance de détection L1 entre le capteur (40) et le bloc de détection (30) dans une direction de détection Y, dans lequel
le bloc de détection (30) et le capteur (40) sont réglés pour se déplacer l'un par rapport à l'autre, et la distance de détection L1 change progressivement dans une direction de mouvement X, dans lequel la distance de détection L1 est configurée pour représenter une position du bloc de détection (30) ou du capteur (40), et la direction de détection Y croise la direction de mouvement X,
dans lequel un rapport entre la distance de détection L1 et une longueur L3 du bloc de détection (30) est supérieure ou égale à 0,1 et inférieure ou égale à 2.

2. Appareil de serrage selon la revendication 1, dans lequel le bloc de détection (30) comprend une surface supérieure (301) et une surface inférieure (302) opposées l'une à l'autre, et la surface supérieure (301) fait face au capteur (40) ; et
dans la direction de mouvement X, une distance L2 entre différents points de détection sur la surface supérieure (301) et la surface inférieure (302) dans la direction de détection Y est différente.

3. Appareil de serrage selon la revendication 2, dans lequel la surface supérieure (301) et la surface inférieure (302) sont toutes deux planes et forment un angle inclus α entre elles.

4. Appareil de serrage selon la revendication 3, dans lequel l'angle inclus α est supérieur ou égal à 1 degré et inférieur ou égal à 20 degrés.

5. Appareil de serrage selon l'une quelconque des revendications 1 à 4, dans lequel le capteur (40) est un capteur de proximité.

6. Appareil de serrage selon l'une quelconque des revendications 1 à 5, dans lequel la distance de détection L1 est supérieure ou égale à 1 mm et inférieure ou égale à 20 mm.

7. Appareil de serrage selon l'une quelconque des revendications 1 à 6, dans lequel dans la direction de mouvement X, la longueur L3 du bloc de détection (30) est supérieure ou égale à 10 mm et inférieure ou égale à 40 mm.

8. Appareil de serrage selon l'une quelconque des revendications précédentes, dans lequel le cadre de support (10) est doté d'une voie de mouvement (101) s'étendant dans la direction de mouvement X, et le mandrin (20) comprend un coulisseau (201) situé dans la voie de mouvement (101).

9. Appareil de serrage selon la revendication 8, dans lequel le cadre de support (10) comprend :
une poutre de support supérieure (102) dotée de la voie de mouvement (101) ; et
une poutre de support inférieure (103) agencée à l'opposé de la poutre de support supérieure (102) et dotée de la voie de mouvement (101), dans lequel
deux côtés opposés de la même surface du mandrin (20) sont chacun dotés d'un coulisseau (201), dans lequel un des coulisseaux (201) est situé dans la voie de mouvement (101) sur la poutre de support supérieure (102), et l'autre des coulisseaux (201) est situé dans la voie de mouvement (101) sur la poutre de support inférieure (103).

10. Appareil de serrage selon la revendication 9, dans lequel le mandrin (20) comprend :
un corps de mandrin (202), dans lequel les coulisseaux (201) sont situés sur deux côtés opposés du corps de mandrin (202) ; et
un bloc de mandrin (203) relié à une partie intermédiaire du corps de mandrin (202).

11. Appareil de serrage selon l'une quelconque des revendications 1 à 10, comprenant en outre :
un cylindre pneumatique (50), dans lequel un corps de cylindre (501) du cylindre pneumatique (50) est relié au cadre de support (10), et une tige de piston (502) du cylindre pneumatique (50) est reliée au mandrin (20).

12. Système de roulement, comprenant l'appareil de serrage selon l'une quelconque des revendications 1 à 11.
